# EUROPEAN PATENT APPLICATION

(11) **EP 2 597 350 A1**
(43) Date of publication of application: **29.05.2013**
(21) Application number: 11806323.9
(22) Date of filing: 09.06.2011
(51) Int. Cl.: F16P 3/12

(54) **DEVICE FOR PREVENTING OCCUPATIONAL ACCIDENTS**

(30) Priority: 01.07.2010 ES 201000872
(71) Applicant: Martinez Sanchez, José Maria, Orihuela 03300, Alicante (ES)
(72) Inventor: Martinez Sanchez, José Maria, Orihuela 03300, Alicante (ES)
(74) Representative: Carpintero Lopez, Francisco
(86) International application number: PCT/ES2011/000194
(87) International publication number: WO 2012/007604

(57) **Abstract**

The invention relates to a device based on a meter (2) for measuring human or animal energy and comprising an output (3) provided with a thin high-sensitivity cable (4) which is coupled at the terminal thereof to the dangerous tools of machines or apparatuses. Another cable (6) extends through an opening (7) to a transceiver (8) and the system is earthed upon contact with the machine operator's skin, such that the operator's own energy causes the machine to stop, thereby preventing an accident.

## Description

The invention relates to a prevention device that is useful in workplaces such as large scale factories, small scale factories and private workplaces.

The device of the invention aims to achieve four objectives:

The first objective is to protect the worker or operator from both industrial and personal work machines and tools. Eighty percent of these accidents are inadvertently caused by the worker whose mind is shrouded with everyday problems, causing him/her to suffer an accident due to distraction, lack of attention, etc.

The second objective of the invention is to obtain additional safety both at the work level and at the social and human level, thereby preventing any type of injuries, even injuries as severe as an amputation (or death), which may leave the worker unfit to perform his/her work activity, affecting his/her family life, etc.

The third objective of the invention is also to prevent damages in the industrial and business finances caused both by the need to replace an injured worker until he/she completely recovers, and by hampering his/her professional continuity, with the social costs derived therefrom.

The fourth objective of the proposed device is to improve some aspects of the invention itself.

The accident prevention device object of the invention can be installed inside work machines preventing irritating disturbances and weights, and the inventive device is reduced in size with new modern electronic components, the inventive device being concealed in both heavy and light (three-phase) or single-phase machines.

The reduced components are installed in the actual machines. The device is provided with a thin high-sensitivity cable which is connected to the dangerous tool of the corresponding machine and/or apparatuses, and which in turn is connected to a sensitivity detector, a metal molecular energy meter, either directly or insulated by a piece of sturdy plastic or rubber, according to the characteristics of the tools to be handled and their shapes (pointed tools, bits, toothed saws, blades, cylinders, etc.), for the purpose of insulating the earth conductivity of the cable from the rest of the machine or apparatuses.

The circuit is completed with another cable having the same characteristics as the preceding one, measuring the energy of the entire human body and also that of animals. This second cable is connected with a small metal sheet and to the underside of the foot through the sole of the shoe, or by contacting a ring in the head of the worker with or a photocell or not which, since it is connected to the same sensitivity detector and due to the positive-negative output condition thereof, causes the motors of said machines or tools to disconnect instantaneously due to the earthing in the operator's body, opening the circuit of one of its cables connected to the grid, when the operator handling dangerous machines and/or apparatuses touches the tool in question at any point of his/her body, directly on the skin or through his/her clothing,.

Due to the earthing in the operator with his/her body and the two cables, the circuit of the sensitivity detector is closed, enabling the coil thereof to move a needle installed therein, registering the situation of a possible accident by means of its movement, entering into the field of a photocell. Resistant electric brakes making the machines stop at the very instant without delay can further be installed.

This can be alternatively achieved with a cable connected to the coil and another cable touching the needle and closing a circuit of one of the cables plugged into the grid (high resistance grid) powering two coils having therein a shaft which is half hard plastic and half chrome plated iron. In this manner, since the circuit is closed, the coils pull the head of the shaft having half of its body made of polished copper backward, contacting two tips also made of polished copper, in turn contacting two tips made of polished copper, opening the circuit of one or two of the cables thereof connected to the three-phase or single-phase grid to which there are connected two three-phase or single-phase work machines, simultaneously or separately.

This can be performed either by means of the thin cable connecting the sensitivity detector to the feet or the forehead of the user as indicated above or by means of an installation comprising a cell battery and a wireless emitter which will allow the user to move with complete freedom, because if the cable is connected by means of the emitter, it can be disconnected from the machines regardless of the user's position.

The components of the device are fitted to a small hard plastic plate for being attached to the machines and apparatuses to offer additional safety in terms of insulating from metals of machines and apparatuses.

The device of the invention can be made of plastic, metal material, wood, and other different more appropriate and suitable materials as well as modern electronic components for a better application to its function and a greater manufacturing economy of the device for industrial use, personal use, etc.

To complete the description made and for the purpose of aiding to better understand the features of the invention, a detailed description of a preferred embodiment will be provided based on a set of drawings attached as an integral part of this specification, and wherein the following has been depicted as a mere guidance with a non-limiting character:

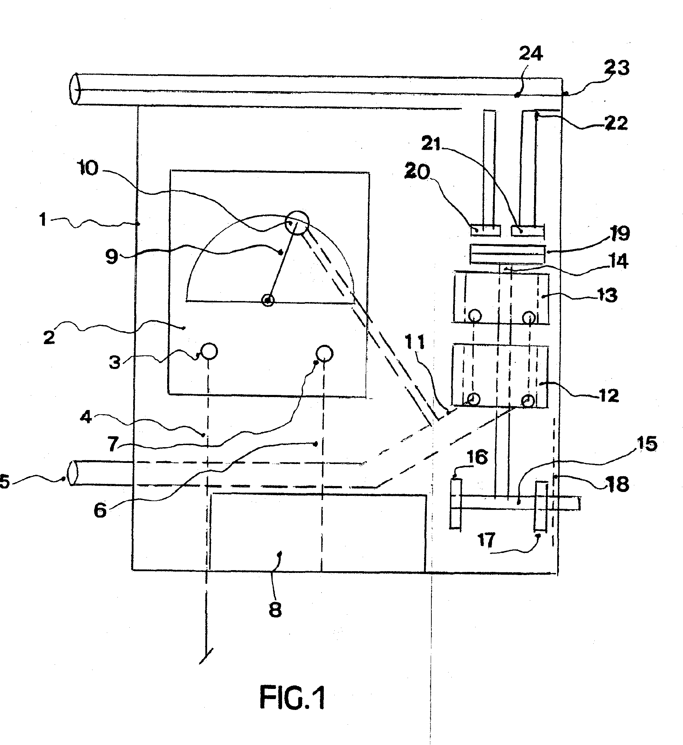

Figure 1 schematically shows the accident prevention device in its basic configuration.
Figure 2 schematically shows an improved embodiment of the accident prevention device for obtaining greater stopping sensitivity.
Figure 3 shows a photograph of a prototype of a work machine, where the prevention device for preventing accidents, object of the invention, is concealed.

According to the drawings, the device (1) object of the invention described primarily consists of a plastic or Teflon sheet provided for housing the components, having therein a very sensitive recorder (2), a human and animal energy detector having an output (3) provided with a thin high-sensitivity cable (4) which is coupled at the terminal thereof to the dangerous tools of machines or apparatuses (for example: a round or endless toothed blade, or drill bit, cylinders, radial saws, etc.), which connection will be made by means of pins or rings according to the corresponding tool, with a Teflon or rubber insulation for insulating it from the rest of the machinery, such that the negative pole thereof earths only in the tool.

The device is complemented with a second cable (6) extending through an opening (7) to a short range transceiver (8), receiving a signal from a very lightweight emitter, with a micro cell battery, connected to a spoon electrode with high-sensitivity alloy, or this is applied to the leg, foot through an iron metal sheet to the ground. The connector which goes or which connects with the user is a wireless connector so that the operator can move comfortably, the frequency used being harmless both to the operator and the machines, and the belt is very comfortable since its total weight will not reach a hundred grams. Therefore, when due to carelessness, sleepiness, lack of reflexes, etc., the user's clothing contacts the tool or when the tool touches any part of the user's skin, regardless of in which part of the body said tear or contact happens, the electrode located on the forehead, foot, leg and the complementary cable connected to the tool closes the circuit through the user's body, influencing the needle (9) which, entering in the field of action of a photocell (10), closes the open circuit of one of the negative cables (11).

The negative and positive poles are connected to the grid at 220 or 125 in mono-phase powering two coils (12) and (13) inside which there is a shaft or rod (14) with a part made of chrome plated iron and the rest of hard plastic finishing in a shaft (15), surrounded by two bearings (16) and (17) and a button assembled on a slot (18) provided in the wall of the base (1) for an easy forward and backward movement.

Half the head (19) of the shaft (14) is made of hard Teflon in the part of attachment with the shaft, the other half being made of polished copper (20) and (21) intercalated in the circuit (22) of the three-phase power supply input (23), keeping it closed, allowing the machine to work, but in the case of a possible accident in the shaft (14), it is pulled by the coils (12), (13) and guided by the two bearings (16), (17) opening the power supply circuit (24), the machine being stopped immediately and the operator thus being saved from a possible accident.

The plugs in the three-phase machines are eliminated since the components are installed inside the machines; the same also occurs with single-phase machines. The device is connected with cables which it has for earth connection together with the machines and apparatuses.

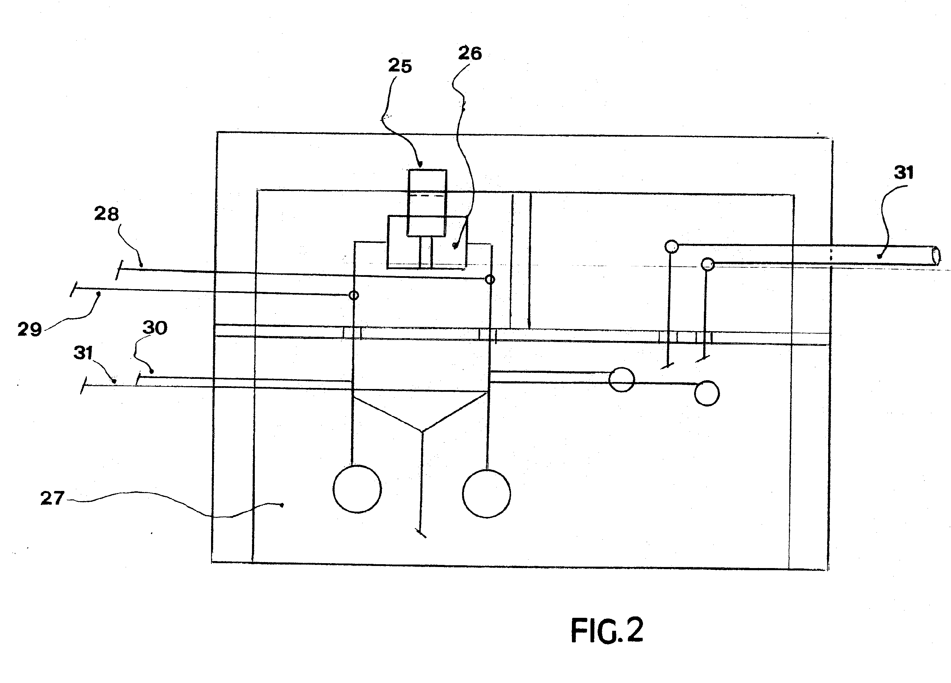

Figure 2 is a depiction with the same objective as the preceding one, in which there has been a change by increasing the power of the detector in reference to the sensitivity of the needle (25) due to the magnetic coil (26) and to an amplifier (27) making it possible for the needle to detect human energy and perform everything described above.

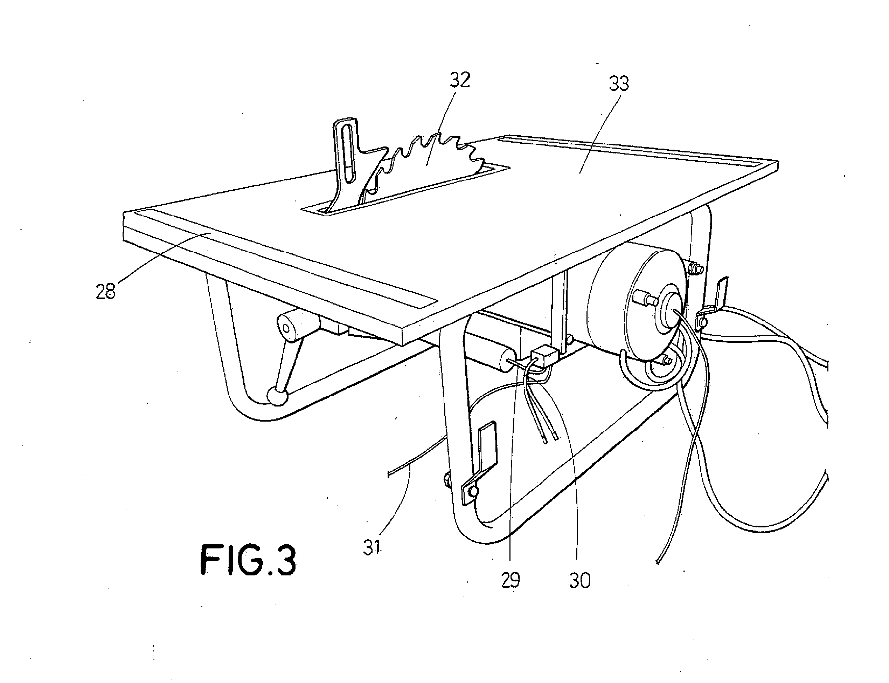

Figure 3 is a radial work machine (28) where the two cables (29) and (30) are coupled to the prevention device without the need of applying plugs. The earth cable is in the plug of the machine to the grid (31), an electric brake has been installed in the work tool which in the event of an accident stops at once (32), the device connected to the work saw (33) has been installed in the bedplate area. It is thus concealed and protected.

## Claims

1. Occupational accident prevention device, **characterized in that** it comprises a thin high-sensitivity cable connected to a dangerous tool or hazardous apparatus and a suitable detector, the circuit being complemented by means of another cable having the same characteristics on some parts of the worker's body, such that when any point of the operator's body touches the mentioned tool, directly on the skin or through his/her clothing, the motors of the mentioned tool are disconnected from the power supply circuit as it opens through the action of the aforementioned detector.

2. Occupational accident prevention device according to claim 1, **characterized in that** the mentioned detector device (2) is formed by a needle (9) connected to the mentioned high-sensitivity cables (4)-(6) and a photocell (10) detecting the movement of the needle (9) and closing the power supply circuit of two coils (12)-(13) inside which there is a shaft (14) with a part made of chrome plated iron and the rest of hard plastic, and having a head (19) coated with polished copper intended for contacting on two bases (20)-(21) for interrupting the power supply circuits of the motor of the mentioned tool, and the device can also be concealed in work machines and apparatuses.

3. The reference device on page 1 of the description can be reduced almost to a size of a die or it can be reduced a little more with modern microelectronic components, the devices being concealed inside large or small machines.

4. The device can be applied to the motors of escalators, which in the event of a person falling along the path of the escalator in question, the escalator would stop at once as he/she touches the steps with his/her hands, preventing an accident. These same applications can also be connected in roller coasters and generally in any type of amusement park (funfair) machinery.
